# FASCICULE DE BREVET EUROPEEN

(11) **EP 1 618 684 B1**
(45) Date de publication et mention de la délivrance du brevet: **19.12.2012**
(21) Numéro de dépôt: 04742546.7
(22) Date de dépôt: 20.04.2004
(51) Int. Cl.: H04B 10/10

(54) **DISPOSITIF DE TRANSMISSION LOCALE DE SIGNAUX A HAUT DEBIT SANS CABLAGE**
VORRICHTUNG ZUR LOKALEN DRAHTLOSEN ÜBERTRAGUNG MIT EINER HOHEN DATENRATE
DEVICE FOR HIGH-SPEED, LOCAL, WIRELESS SIGNAL TRANSMISSION

(30) Priorité: 22.04.2003 FR 0350117
(43) Date de publication de la demande: 25.01.2006
(73) Titulaire: France Télécom, 75015 Paris (FR)
(72) Inventeur: BOUCHET, Olivier, F-35200 RENNES (FR); MONERIE, Michel, F-22300 PLOULEC'H (FR); DUTERTRE, Yvon, F-35690 ACIGNE (FR)
(74) Mandataire: Jeune, Pascale
(86) Numéro de dépôt international: PCT/FR2004/000968
(87) Numéro de publication internationale: WO 2004/095737

(56) Documents cités:
- EP-A- 0 876 019
- WO-A-99/52231
- US-A1- 2002 075 543

## Description

### DOMAINE TECHNIQUE

La présente invention est relative à un dispositif de transmission locale et bilatérale de signaux (de la voie, des données, des images par exemple) sans câblage à haut débit. Un tel dispositif de transmission est utilisable, par exemple, dans un réseau domestique de communication locale sans fil dans l'infrarouge (connu sous la dénomination anglo-saxonne WirDAN pour Wireless Infra Red Domestic Area Network) ou dans un réseau local de communication sans fil dans l'infrarouge (connu sous la dénomination anglo-saxonne WirLAN pour Wireless Infra Red Local Area Network) ou dans un réseau de type Hot Spot qui est un réseau à accès haut débit localisé.

### ÉTAT DE LA TECHNIQUE ANTÉRIEURE

Actuellement les dispositifs de transmission locale et bilatérale sans fil se substituent aux dispositifs câblés car ils sont beaucoup plus souples d'utilisation. Ces dispositifs permettent de faire échanger entre eux des appareils numériques qui ne sont plus tributaires de fils et qui peuvent donc facilement être déplacés.

La transmission s'effectue par liaison radioélectrique ou optique. Le dispositif comporte une base d'émission/réception qui échange avec un ou plusieurs adaptateurs (eux aussi émetteurs/récepteurs) associés chacun à un appareil numérique tel un ordinateur, un périphérique de toute sorte, un téléviseur, un téléphone, une télécommande, un rétroprojecteur, une enceinte acoustique, un ordinateur de poche ou un assistant personnel, un appareil photographique, une caméra ou tout autre appareil numérique domestique ou professionnel.

La base délimite une zone de couverture en lien avec une qualité de service et de transmission. Les adaptateurs placés dans cette zone peuvent se coupler à la base et permettre une communication bilatérale entre l'appareil numérique associé à l'adaptateur et la base.

Plusieurs technologies de transmission sans fil par voie radioélectrique existent. On peut citer la technologie Bluetooth qui offre un débit brut de 1 Mbit/s sur la bande de fréquences dite de 2,4 GHz. Le nombre maximum de communications simultanées est de l'ordre de sept. La technologie Wi-Fi (abréviation de Wireless Fidelity pour fidélité sans fil) portant le nom technique de IEEE 802.11b, offre un débit de 54 Mbit/s sur la bande de fréquences de dite 2,4 GHz ou dite de 5 GHz. Le nombre maximum de communications simultanées est de l'ordre de 50 à 60. La technologie HomeRF offre un débit de 11 Mbit/s sur la bande de fréquences dite de 2,4 GHz. La technologie Hiperlan offre un débit de l'ordre de 20 Mbit/s dans la bande de fréquences dite de 5 GHz, la version 2 permettant d'atteindre un débit de 54 Mbit/s. La zone de diffusion va de 50 à 100 mètres pour toutes ces technologies à l'exception de la technologie Bluetooth pour laquelle la zone de diffusion est de l'ordre de 10 à 30 mètres. Ces technologies présentent plusieurs inconvénients. Le nombre de communications simultanées est restreint, ce qui limite le nombre d'appareils pouvant entrer en jeu en même temps. Le débit global est limité et est partagé par tous les appareils communiquant en même temps. Il existe une différence notable entre le débit brut et le débit utile car des informations de réseau sont transmises avec les signaux utiles proprement dits. Le risque d'interférences existe entre les technologies qui utilisent les mêmes fréquences comme par exemple les technologies Bluetooth et Wi-Fi si elles sont employées simultanément dans la même pièce. Les débits sont généralement inférieurs dans le sens montant (de l'adaptateur vers la base) par rapport à ceux dans le sens descendant (de la base vers l'adaptateur). L'évolutivité est limitée, si les fréquences sont amenées à évoluer, une partie des composants du dispositif sera à changer car non compatible. Un autre problème est lié aux aspects réglementaires qui peuvent apparaître dans l'utilisation des ondes radioélectriques et à leur limite de puissance en fonctionnement.. Un autre inconvénient est que ces techniques sont peu transparentes vis à vis du protocole de communication et ne peuvent donc pas transmettre tous types de signaux numériques.

Les technologies de transmission par voie optique en espace libre commencent à se développer, elles permettent de supprimer certains défauts des transmissions radioélectriques. Elles utilisent généralement l'infrarouge qui ne présente pas, à des niveaux de puissance relativement bas, d'effets nocifs connus sur la santé.

Des dispositifs de transmission par voie optique en espace libre sont connus par exemple dans les documents [1] à [4] référencés à la fin de la présente description. Le document [1] montre un dispositif de transmission entre une base et au moins un adaptateur par vue directe dans l'infrarouge sur un seul canal correspondant à une longueur d'onde. Le document [2] montre un dispositif de transmission entre une base et plusieurs adaptateurs, dans lequel la base émet une pluralité de faisceaux qui vont former chacun un spot sur une surface réfléchissante, ces spots peuvent être considérés comme des sources lumineuses. Chaque adaptateur est éclairé par une telle source. Le document [3] montre un dispositif de transmission dans lequel plusieurs adaptateurs communiquent avec plusieurs bases qui émettent plusieurs faisceaux infrarouges. Un protocole de type CSMA (abréviation anglo-saxonne de Carrier Sense Multiple Access soit accès multiple avec écoute de porteuse) est utilisé pour éviter des collisions lorsque plusieurs adaptateurs veulent communiquer en même temps. Le document [4] montre un dispositif de transmission par infrarouge entre une station centrale et des stations éloignées. Les signaux sont émis selon des trames qui suivent des protocoles connus tels que HDLC (abréviation anglo-saxonne de High Level Data Link Control pour commande de liaison de données à haut niveau) ou SDLC (abréviation anglo-saxonne de Synchronous Data Link Control pour commande synchrone de liaison de données).

Tout comme les dispositifs de transmission par radio, ces dispositifs de transmission par voie optique en espace libre présentent des inconvénients qui sont que le débit global est limité et est partagé par tous les appareils communiquant en même temps. En conséquence, le nombre d'appareils pouvant communiquer en même temps est limité. La sécurité des données transmises est meilleure que dans les techniques radio mais peut ne pas être encore totalement assurée satisfaisante dans les pièces avec de larges surfaces vitrées bien que l'affaiblissement augmente très rapidement avec la distance.

US2002/0075543 montre un example d'un réseau optique par voie libre.

### EXPOSÉ DE L'INVENTION

La présente invention a pour but de réaliser un dispositif de transmission locale et bilatérale de signaux entre une base et au moins un adaptateur par voie optique en espace libre qui ne présente pas les inconvénients précédemment mentionnés, à savoir, la bande passante globale et par utilisateur limitée ainsi que le faible nombre de communications simultanées autorisées.

Pour atteindre ces buts, la présente invention est un dispositif de transmission locale et bilatérale de signaux entre une base et plusieurs adaptateurs par voie optique en espace libre. Les adaptateurs possèdent chacun un identifiant et la base comporte des moyens de routage des signaux et un multiplexeur-démultiplexeur des signaux sur plusieurs longueurs d'onde de travail, ces moyens de routage comportant une table d'adressage réalisant une correspondance entre au moins un identifiant d'un adaptateur et au moins une des longueurs d'onde de travail, un adaptateur au moins recevant l'ensemble des signaux émis par la base.

Ainsi en effectuant un multiplexage/démultiplexage sur plusieurs longueurs d'onde, on bénéficie de plusieurs canaux de communication, chacun correspondant à une des longueurs d'onde, et dans ces canaux le débit peut être nominal. On peut alors multiplier par le nombre de canaux le débit de transmission autorisé par rapport aux dispositifs de l'art antérieur.

Un adaptateur peut émettre vers la base un signal porté par une longueur d'onde attribuée à cet adaptateur.

Il est possible de prévoir un adressage dynamique de la base, pour cela les moyens de routage disposent d'une longueur d'onde de gestion pour échanger des signaux de gestion avec les adaptateurs.

La transmission est de préférence une transmission dans l'infrarouge.

La base peut comporter un premier sous-ensemble avec le multiplexeur-démultiplexeur et les moyens de routage, ce premier sous-ensemble coopérant avec au moins un second sous-ensemble.

On peut prévoir que le second sous-ensemble soit déporté du premier sous-ensemble, ce dernier peut être relié par au moins une fibre optique de transmission au second sous-ensemble.

Le premier sous-ensemble de la base peut être formé d'une pluralité de convertisseurs électrique-optique montés entre les moyens de routage et le multiplexeur et d'une pluralité de convertisseurs optique-électrique montés entre le démultiplexeur et les moyens de routage.

Le premier sous-ensemble de la base peut aussi comporter un amplificateur en sortie du multiplexeur et/ou un amplificateur en entrée du démultiplexeur.

Le premier sous-ensemble de la base peut comporter un adaptateur d'interface en sortie du multiplexeur et/ou un adaptateur d'interface en entrée du démultiplexeur.

Les moyens de routage peuvent comporter un commutateur relié en sortie à la pluralité de convertisseurs électrique-optique et en entrée à la pluralité de convertisseurs optique-électrique.

Le commutateur peut être relié en entrée à un réseau de communication lorsque la base n'-est pas autonome.

Le second sous-ensemble de la base peut comporter une partie émettrice avec une optique de mise en forme qui coopère avec la fibre optique de transmission et une partie réceptrice avec une ou plusieurs lentilles convergentes qui coopèrent avec la fibre optique de transmission.

L'optique de mise en forme peut être associée à un diffuseur holographique pour améliorer la répartition spatiale de puissance lumineuse et/ou contrôler la directivité du faisceau émis. Au moins un élément pris parmi les lentilles convergentes, l'optique de mise en forme, le diffuseur holographique peut être ajustable.

Lorsque la partie réceptrice comporte plusieurs lentilles convergentes, un coupleur optique peut être inséré entre les lentilles convergentes et la fibre optique de transmission, ce coupleur étant relié par fibres optiques aux lentilles convergentes.

Les lentilles convergentes peuvent être disposées selon un plan ou selon une portion de sphère.

L'adaptateur est destiné à être interfacé ou intégré à un appareil numérique qui va pouvoir communiquer avec le réseau et/ou un autre appareil numérique via la base.

Notamment lorsque l'appareil numérique est mobile, l'adaptateur peut comporter un système de pointage vers le second sous-ensemble de la base, ce système de pointage étant asservi sur un maximum de signal reçu de la base.

L'adaptateur peut comporter une partie réceptrice avec un convertisseur optique-électrique et une partie émettrice formée d'un réflecteur de type coin de cube avec au moins une face formée d'un miroir actif apte à prendre une position de réflexion ou une position de diffraction en fonction d'un signal reçu de l'appareil numérique, et une face en miroir semi-transparent placée en amont du convertisseur optique-électrique.

Dans une variante, l'adaptateur peut comporter une partie émettrice avec un convertisseur électrique-optique et une partie réceptrice avec un convertisseur optique-électrique, ces convertisseurs étant destinés à être interfacés ou intégrés à l'appareil numérique.

La parie émettrice et la partie réceptrice peuvent être montée, sur une même carte PC et/ou en capsulées dans un même boîtier.

Le convertisseur optique-électrique de l'adaptateur peut coopérer avec une optique convergente et avec un dispositif de filtrage.

Le dispositif de filtrage peut être asservi en longueur d'onde et comporter éventuellement une position passe-tout lorsque la base effectue un adressage dynamique.

Le convertisseur électrique-optique peut coopérer avec une optique de mise en forme.

Il peut être asservi en longueur d'onde.

La présente invention concerne également un procédé de transmission locale et bilatérale de signaux entre une base et plusieurs adaptateurs par voie optique en espace libre, caractérisé en ce qu'il comporte les étapes suivantes :
a) initialisation d'une communication entre la base et plusieurs adaptateurs sur plusieurs premières longueurs d'onde, cette transmission se faisant pour deux au moins des adaptateurs sur deux premières longueurs d'onde de travail différentes, chacune des deux premières longueurs d'onde étant affectée à l'un des adaptateurs, un adaptateur au moins recevant l'ensemble des signaux émis par la base,
b) réponse des adaptateurs à la base, cette réponse se faisant pour chacun des deux adaptateurs sur la première longueur d'onde de travail qui lui est affectée ou pour au moins un d'entre eux sur une seconde longueur d'onde de travail.

Il est possible, pour améliorer la sécurité de transmission, de prévoir un protocole de saut temporel en longueur d'onde pour les longueurs d'onde de travail. La transmission peut être protégée par cryptage et/ou mot de passe.

Dans le cas d'un adressage dynamique, l'étape d'initialisation de la communication peut être précédée par les étapes suivantes :
a') interrogation par la base des adaptateurs sur une longueur d'onde de gestion, chaque adaptateur possédant un identifiant qui lui est propre,
b') réponse des adaptateurs désirant échanger, sur la longueur d'onde de gestion, en envoyant leur identifiant à la base,
c') affectation des premières longueurs d'onde de travail aux adaptateurs ayant répondu et éventuellement des secondes longueurs d'onde de travail,
d') envoi par la base des premières longueurs d'onde de travail et éventuellement des secondes longueurs d'onde de travail aux adaptateurs ayant répondu, sur la longueur d'onde de gestion.

L'étape d') peut être suivie par une étape d'envoi d'un accusé de réception par les adaptateurs ayant reçu au moins une première longueur d'onde de travail, sur la longueur d'onde de gestion.

Le procédé peut comporter les étapes suivantes lorsque au moins un nouvel adaptateur désire échanger avec la base :
a") appel du nouvel adaptateur à la base sur la longueur d'onde de gestion en envoyant son identifiant,
b") affectation d'une première longueur d'onde de travail et éventuellement d'une seconde longueur d'onde de travail au nouvel adaptateur,
c") envoi par la base de la première longueur d'onde de travail et éventuellement de la seconde longueur d'onde de travail, au nouvel adaptateur, sur la longueur d'onde de gestion.

L'étape c") peut être suivie par une étape d'envoi d'un accusé de réception par le nouvel adaptateur ayant reçu au moins la première longueur d'onde de travail sur la longueur d'onde de gestion.

Dans le cas d'un adressage dynamique, le procédé peut comporter une étape d'adaptation de chacun des adaptateurs à la première longueur d'onde de travail et éventuellement à la seconde longueur d'onde de travail qui lui sont affectées.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 montre de manière schématique un exemple d'un dispositif de transmission selon l'invention ;
- les figures 2A, 2B, 2C, 2D montrent respectivement le premier sous-ensemble et trois exemples du second sous-ensemble de la base du dispositif de transmission de l'invention ;
- les figures 3A, 3B montrent deux exemples d'un adaptateur du dispositif de transmission de l'invention ;
- la figure 4 montre le déroulement d'une session de transmission avec un adressage statique ;
- les figures 5A, 5B montrent respectivement le déroulement d'une session de transmission avec un adressage dynamique et le déroulement d'une transmission avec un nouvel adaptateur désirant échanger avec la base ;
- la figure 6 montre un exemple de table d'adressage dans une configuration avec protocole de saut temporel en longueur d'onde.

### EXPOSÉ DÉTAILLÉ DE MODES DE RÉALISATION PARTICULIERS

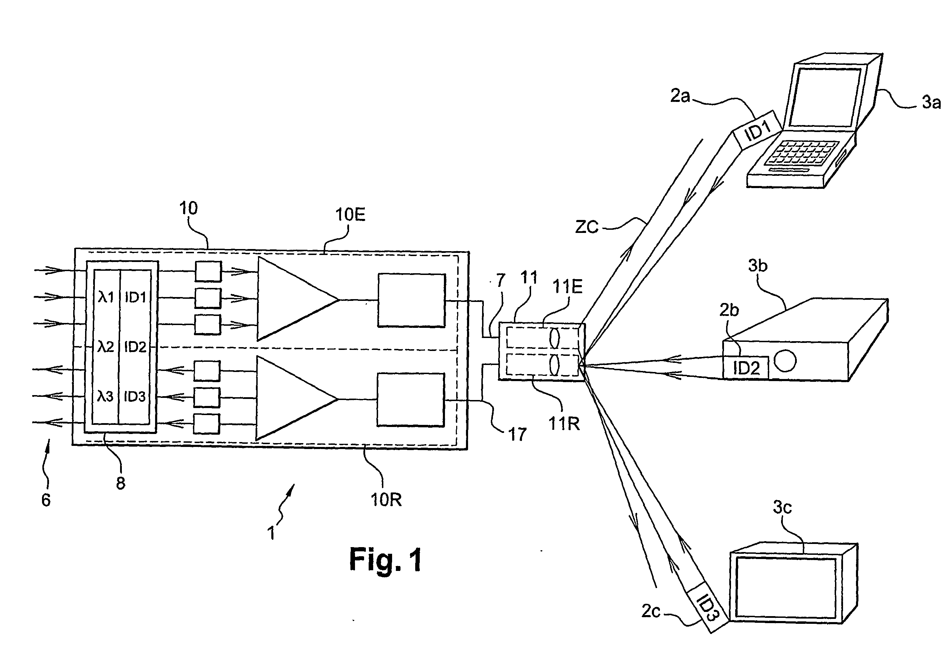

On se réfère à la figure 1 qui montre schématiquement un dispositif de transmission de signaux locale et bilatérale, par voie optique en espace libre, entre une base 1 et au moins un adaptateur 2a, 2b, 2c conforme à l'invention. Sur la figure 1, trois adaptateurs 2a, 2b, 2c sont représentés et les adaptateurs 2a, 2c sont interfacés chacun avec un appareil numérique 3a, 3c, l'adaptateur 2b étant lui intégré à un appareil numérique 3b. Ces appareils numériques peuvent être un ordinateur personnel, un vidéo projecteur, un téléviseur ou tout autre appareil numérique, domestique ou professionnel. On suppose que la transmission se fait par exemple suivant le protocole Ethernet, MégaEthernet ou GigaEthernet, mais d'autres protocoles sont possibles.

La base 1 peut être autonome ou être interfacée à un réseau de communication 6 filaire optique ou électrique. C'est cette configuration qui est représentée sur la figure 1, le réseau 6 étant destiné à véhiculer des signaux électriques ou optiques à destination de ou provenant des appareils numériques 3a, 3b, 3c via la base 1 et les adaptateurs 2a, 2b, 2c.

La base 1 route des signaux provenant du réseau 6 vers les adaptateurs 2a, 2b, 2c et donc les appareils numériques 3a, 3b, 3c ou bien route des signaux provenant d'un appareil numérique vers un autre appareil numérique, via les adaptateurs ou vers le réseau 6. Le routage est bilatéral. Lorsque la base 1 est autonome, elle ne peut router des signaux que d'un appareil numérique vers un autre appareil numérique via les adaptateurs 2a, 2b, 2c.

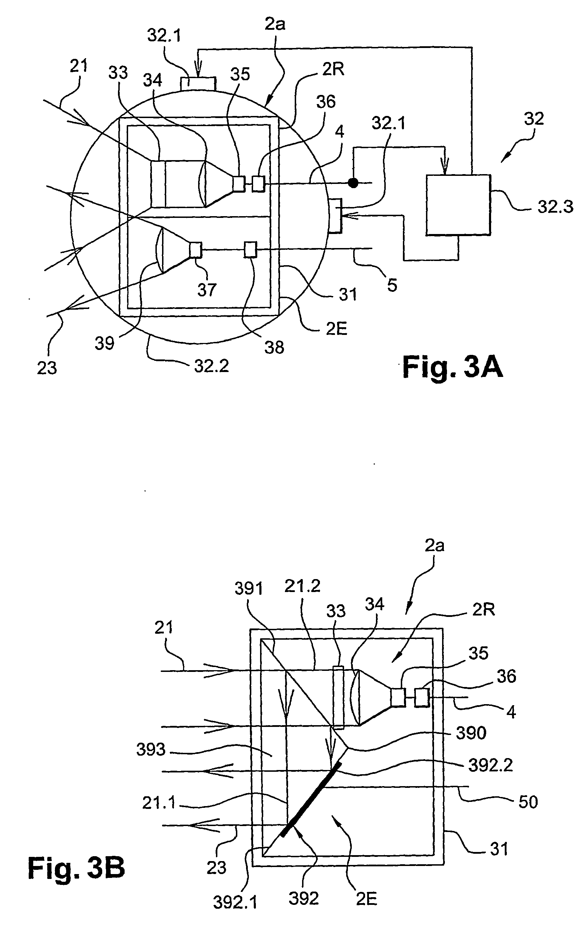

De manière avantageuse, la base 1 comporte un premier sous-ensemble 10 devant être alimenté en énergie électrique et au moins un second sous-ensemble 11 qui soit ne comporte que des composants optiques passifs et n'a pas besoin d'être alimenté en énergie électrique, soit apporte des fonctionnalités supplémentaires nécessitant une alimentation en énergie électrique. Chacun de ces sous-ensembles 10, 11 comporte une partie émettrice 10E, 11E et une partie réceptrice 10R, 11R puisque le dispositif de transmission objet de l'invention est bilatéral. Il en est de même pour les adaptateurs comme on le verra sur la figure 3.

Le premier sous-ensemble 10 est relié à chacun des seconds sous-ensembles 11 par au moins une fibre optique de transmission 7, 17. Le second sous-ensemble 11 peut être éloigné du premier sous-ensemble 10, il peut par exemple être fixé au plafond ou au mur dans une pièce alors que le premier sous-ensemble 10 peut être posé au sol ou sur un meuble de manière à être raccordable aisément au secteur et éventuellement au réseau de communication 6. Il est bien sûr possible que le premier sous-ensemble 10 et le second sous-ensemble 11 soient accolés.

Le second sous-ensemble 11 délimite dans la pièce une zone de couverture ZC dans laquelle doivent être placés les adaptateurs 2a, 2b, 2c pour qu'une communication puisse être établie. Chaque appareil 3a, 3b, 3c est placé à proximité de l'adaptateur 2a, 2b, 2c avec lequel il coopère.

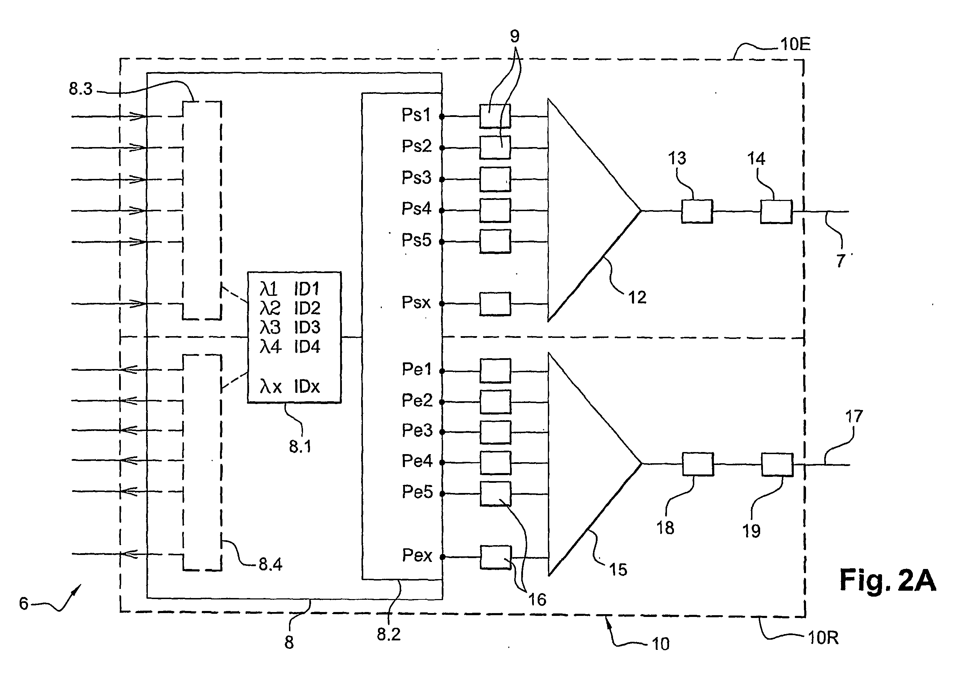

On se réfère à la figure 2A qui montre de manière plus précise les constituants du premier sous-ensemble 10 de la base 1. Le premier sous-ensemble 10 de la base 1 comporte des moyens de routage 8 contenant une table d'adressage 8.1 qui définit un lien entre au moins un identifiant ID1, ID2, ID3 d'un adaptateur et au moins une longueur d'onde λ1, λ2, λ3. L'identifiant ID1, ID2, ID3 de l'adaptateur 2a, 2b, 2c peut être l'adresse MAC (abréviation anglo-saxonne de Medium Acces Control soit couche d'accès au réseau) de l'appareil 3a, 3b, 3c avec lequel il coopère. Au lieu de l'adresse MAC, l'identifiant peut être l'adresse IP (abréviation anglo-saxonne de Internet Protocol pour protocole Internet) de l'appareil si ce dernier est amené à communiquer selon le protocole Internet.

Le lien peut être statique ou bien dynamique. Dans le premier cas, la table d'adressage 8.1 est statique, c'est à dire qu'elle a été enregistrée au préalable dans la base 1, elle affecte une ou deux longueurs d'onde de travail λ1, λ2, λ3 à chacun des adaptateurs 2a, 2b, 2c dont les identifiants sont respectivement ID1, ID2, ID3. C'est le cas représenté sur la figure 1. Cet enregistrement est réalisé avant le début d'une session de communication. La ou les longueurs d'onde de travail affectée à un adaptateur est connue de cet adaptateur avant le début de la session de communication.

En fait un adaptateur au moins reçoit l'ensemble des signaux émis par la base. Un adaptateur peut recevoir et émettre sur une longueur d'onde de travail unique ou bien recevoir sur une première longueur d'onde de travail et émettre sur une seconde longueur d'onde de travail. Au moins deux longueurs d'onde de travail sont différentes d'une part lorsque la base émet et d'autre part lorsque les adaptateurs émettent.

Dans le second cas, la table d'adressage 8.1 est dynamique, une longueur d'onde de gestion λ0 unique est affectée à des communications de gestion entre la base 1 et les adaptateurs 2a, 2b, 2c et l'attribution des longueurs d'onde de travail se fait en fonction du nombre d'adaptateurs 2a, 2b, 2c désirant communiquer en même temps.

Les moyens de routage 8 comportent de plus un commutateur 8.2 par exemple un commutateur de niveau 2 Ethernet, MégaEthernet ou GigaEthernet. Ce commutateur 8.2 est destiné à orienter des signaux qui entrent dans les moyens de routage 8 vers une sortie appropriée. Les moyens de routage 8 sont reliés d'un côté au réseau 6 et de l'autre, pour la partie émettrice 10E, à une pluralité de convertisseurs électrique-optique 9 et pour la partie réceptrice 10R, à une pluralité de convertisseurs optique-électrique 16. Les convertisseurs électrique-optique 9 sont destinés à convertir des signaux électriques à émettre en signaux optiques ayant une longueur d'onde qui a été déterminée par la table d'adressage 8.1. Ces signaux électriques proviennent du réseau 6 ou sont des signaux provenant d'un adaptateur 2a, 2b, 2c, et qui ont été convertis en signaux électriques dans la partie réceptrice 10R du premier sous-ensemble 10 comme on le verra ultérieurement.

Ces signaux optiques ont une longueur d'onde qui est celle qui est affectée à l'adaptateur destinataire. On prévoit autant de convertisseurs électrique-optique 9 que de longueurs d'onde disponibles. La sortie de chacun des convertisseurs électrique-optique 9 est reliée à l'entrée d'un multiplexeur 12 en longueur d'onde dont la sortie est reliée à la partie émettrice 11E du second sous-ensemble 11 via au moins une fibre optique 7 de transmission.

Les moyens de routage 8 peuvent être tout électrique comme on vient de le décrire. Si des signaux optiques sont à router en provenance du réseau 6 et/ou vers le réseau 6, les moyens de routage 8 peuvent inclure un convertisseur optique-électrique 8.3 et/ou un convertisseur électrique-optique 8.4, ce ou ces convertisseurs 8.3, 8.4 étant placés entre le commutateur 8.2 et le réseau 6. Ils peuvent également être tout optique.

Dans la partie émettrice 10E du premier sous-ensemble 10 de la base 1, les moyens de routage 8 définissent un lien entre un identifiant ID1,..... , Idx d'un adaptateur 2a, 2b, 2c et un port Ps1, .......Psx de sortie relié à l'un des convertisseurs électrique-optique 9.

On peut prévoir entre la sortie du multiplexeur 12 en longueur d'onde et la fibre optique 7 de transmission, dans l'ordre un amplificateur optique 13 et/ou un adaptateur d'interface 14. L'amplificateur optique 13 peut être de type EDFA (abréviation anglo-saxonne de Erbium-Doped Fiber Amplifier pour Amplificateur à Fibre Dopée à l'Erbium). Cet amplificateur optique 13 réalise une amplification adaptée à la configuration de la pièce dans laquelle se trouve le dispositif de transmission. La fibre optique 7 de transmission véhicule vers la partie émettrice 11E du second sous-ensemble 11 des signaux multiplexés en longueur d'onde et ayant des longueurs d'onde de travail différentes en correspondance avec les identifiants des adaptateurs destinataires. Le débit dans la fibre optique de transmission 7 peut être multiplié par x si x est le nombre de longueurs d'onde utilisées ou de canaux de transmission.

La transmission est une transmission optique et de préférence, elle se situe dans l'infrarouge, par exemple aux alentours de 1,5 micromètres. Le fait de travailler autour de cette longueur d'onde, offre une bonne sécurité oculaire si on utilise des équipements laser de classe 1 dont la puissance est de l'ordre de quelques milliwatts. Un autre avantage apporté par ce choix de longueur d'onde est qu'elle offre un bilan de liaison supérieur et une meilleure immunité à la lumière ambiante que dans le visible ou le proche infrarouge (entre environ 780 et 980 nanomètres).

La norme internationale ITU-TG692 définit un espacement en nanomètres entre deux longueurs d'onde permises se trouvant dans la bande. Avec un multiplexage en longueur d'onde classique (WDM abréviation de Wavelength Division Multiplexing), cet espacement est de 1,6 nanomètres ou de 0,8 nanomètre. Avec un multiplexage en longueur d'onde dense (DWDM abréviation de Dense Wavelength Division Multiplexing) cet espacement peut n'être que de 0,4 nanomètre. Ainsi dans la bande L (1566-1605 nanomètres), il est possible d'utiliser 20 à 40 longueurs d'onde différentes et donc 20 à 40 appareils peuvent communiquer en même temps avec un débit de quelques Mbit/s à quelques Gbit/s.

Les convertisseurs électrique-optique 9 peuvent être réalisés par des diodes laser ayant chacune une longueur d'onde propre. On utilise une diode par longueur d'onde ou par canal.

Dans la partie réceptrice 10R du premier sous-ensemble 10 de la base 1, les moyens de routage 8 effectuent un lien entre l'identifiant ID1, ID2, ID3 d'un adaptateur dont provient le signal optique et un port d'entrée Pe1, ...Pex et donc une longueur d'onde. Ils orientent les signaux reçus vers leur destinataire sur le réseau 6 ou bien vers un autre adaptateur via la partie émettrice 10E du premier sous-ensemble 10.

La partie réceptrice 10R du premier sous-ensemble 10 de la base 1 comporte un démultiplexeur 15 en longueur d'onde relié en entrée à la partie réceptrice 11R du second sous-ensemble 11 via au moins une fibre optique de transmission 17 et dont la sortie alimente une pluralité de convertisseurs optique-électrique 16, chacun fonctionnant à une longueur d'onde différente. Ces convertisseurs optique-électrique 16 sont destinés à convertir les signaux optiques reçus des adaptateurs en des signaux électriques à transmettre aux ports d'entrée Pe1, ... Pex des moyens de routage 8. Les convertisseurs optique-électrique 16 peuvent être réalisés par des photodiodes diodes PIN ou à avalanche.

Il est possible de prévoir entre la fibre optique de transmission 17 et le démultiplexeur 15, dans l'ordre un adaptateur d'interface 19 et/ou un amplificateur optique 18. L'amplificateur optique 18 peut être de type EDFA (abréviation anglo-saxonne de Erbium-doped fibre amplifier pour amplificateur à fibre dopée à l'erbium).

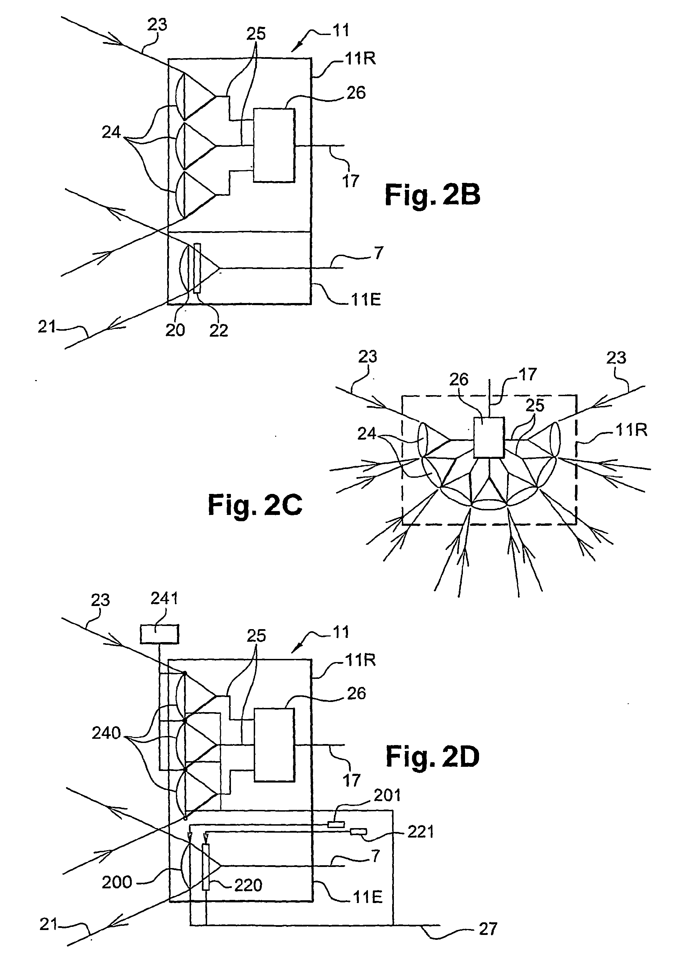

Un second sous-ensemble 11 de la base 1 est représenté en détails sur la figure 2B. Ce second sous-ensemble 11 est formé d'une partie émettrice 11E et d'une partie réceptrice 11R accolées. La partie émettrice 11E comporte une optique 20 de mise en forme, dioptrique ou diffractive permettant l'émission d'un faisceau optique 21 de configuration appropriée vers les adaptateurs 2a, 2b, 2c. Cette optique 20 est reliée par la fibre optique de transmission 7 à la partie émettrice 10E du premier sous-ensemble 10 de la base 1. Cette optique 20 peut être une lentille divergente afin d'assurer une divergence appropriée du faisceau optique émis 21. Il est possible d'insérer entre l'optique 20 et l'extrémité de la fibre optique de transmission 7 un diffuseur holographique 22 pour contrôler la répartition spatiale de la puissance lumineuse et/ou la directivité du faisceau émis 21 Ainsi le faisceau optique 21 peut être un faisceau d'émission omnidirectionnel homogène éclairant tout ou partie de la pièce dans laquelle les adaptateurs 2a, 2b, 2c sont disposés.

La base 1 émet donc un signal optique qui éclaire directement ou indirectement l'ensemble des adaptateurs.

Des fonctions électriques peuvent éventuellement être implémentées dans le second sous-ensemble 11 comme l'illustre la figure 2D. Par l'intermédiaire d'une alimentation en énergie (illustrée par une connexion 27) et de moyens de commande 201 de l'optique 200 qui est maintenant ajustable, il est possible d'obtenir une divergence contrôlée et adaptable à l'environnement de la pièce par exemple.

Avec des moyens de commande 221 du diffuseur holographique 220 qui est maintenant ajustable, il est possible de d'obtenir un front d'onde contrôlé et adaptable en fonction de l'emplacement des adaptateurs dans la pièce 2a, 2b, 2c. Ces moyens de commande 201, 221 sont placés préférentiellement dans la base 1, mais cette dernière n'est pas représentée sur la figure 2D. L'émission se faisant par lien optique en espace libre impose que le faisceau optique soit divergent mais pas trop pour limiter les pertes. Par exemple, si on considère une surface de capture au sol de 8 m² et un convertisseur optique-électrique de l'adaptateur ayant un diamètre de 2,5 cm l'atténuation est en première approximation égale à :
10l0g (8/5.10⁻⁴) = 42 dB. Une telle valeur est compatible avec les puissances émises (de l'ordre de quelques dBm) et avec la sensibilité des convertisseurs optique-électrique actuels (de l'ordre de -40 dBm).

La partie réceptrice 11R du second sous-ensemble 11 de la base 1 est destinée à recevoir des faisceaux optiques 23 émis par les adaptateurs 2a, 2b, 2c. Elle comporte une ou plusieurs lentilles convergentes 24 interfacées chacune à une fibre optique 25. Ces fibres optiques 25 sont reliées à l'entrée d'au moins un coupleur optique 26. La fibre optique de transmission 17 provenant de la partie réceptrice 10E du premier sous-ensemble 10 est reliée en sortie du coupleur optique 26. Ce coupleur optique 26 permet d'injecter des signaux optiques provenant en même temps de plusieurs adaptateurs 2a, 2b, 2c sur la fibre optique de transmission 17. Les lentilles convergentes 24 peuvent être disposées selon un plan ou selon une portion de sphère comme sur la figure 2C.

De manière similaire à la partie émettrice 11E, la partie réceptrice 11R peut intégrer une ou plusieurs fonctions électriques comme le montre la figure 2D. Il est possible de prévoir, par exemple, des moyens de commande 241 des lentilles convergentes 240 qui sont maintenant ajustables de manière à optimiser la qualité de réception. Les moyens de commande 241 sont placés préférentiellement dans la base 1, mais cette dernière n'est pas représentée sur la figure 2D.

On va décrire maintenant un premier exemple d'adaptateur 2a. On se réfère aux figures 3A, 3B. L'adaptateur 2a comporte, tout comme les premier et second sous-ensembles, une partie émettrice 2E et une partie réceptrice 2R. Ces deux parties 2E, 2R peuvent être encapsulées dans un même boîtier 31 et/ou être montées sur une même carte, par exemple une carte de type de celle définie par l'Association Internationale pour la Carte à Mémoire pour Ordinateur Personnel connue par l'abréviation PCMCIA pour Personal Computer Memory Card International Association, ce type de carte est encore appelé « carte PC ». Sur les figures 3A, 3B, la référence 31 pourrait tout à fait représenter une telle « carte PC ».

L'adaptateur 2a est interfacé à un appareil numérique (non représenté sur les figures 3A, 3B) par des connexions électriques 4, 5 sur la figure 3A et 4, 50 sur la figure 3B. Il pourrait être intégré à l'appareil numérique.

L'adaptateur 2a peut être doté d'un système de pointage 32 angulaire asservi qui permet un calage automatique de l'adaptateur 2a vers le second sous-ensemble de la base, quelles que soient leurs positions relatives. Ce système de pointage 32 est important en émission, notamment lorsque l'appareil avec lequel coopère l'adaptateur 2a est mobile dans la zone de couverture de la base ou lorsqu'un obstacle risque de survenir entre l'adaptateur 2a et le second sous-ensemble. Ce système de pointage 32 asservi, mis en fonctionnement en début de transmission et/ou en permanence, peut comporter un support hémisphérique 32.2 sur lequel repose les parties émettrice 2E et réceptrice 2R de l'adaptateur 2a. Ce support 32.2 est apte à être déplacé dans deux dimensions par deux moteurs 32.1. Le support 32.2 hémisphérique est représenté en vue de dessus sur la figure 3. Ces moteurs 32.1 sont pilotés par un dispositif de commande 32.3 qui, pour plusieurs positions angulaires de l'adaptateur 2a recueille des signaux en provenance de la base et véhiculés par la connexion 4, qui détermine à partir de ces signaux un maximum de signal en puissance et qui commande les moteurs 32.1 pour que l'adaptateur 2a prenne la position qu'il avait lors de la réception du maximum de signal. Le système de pointage 32 n'est pas représenté sur la figure 3B pour ne pas surcharger la figure.

La partie réceptrice 2R est formée d'un dispositif de filtrage 33 qui peut être fixe ou être asservi en longueur d'onde. Ce dispositif de filtrage sera fixe lorsque l'adressage de la base 1 sera statique, c'est à dire lorsque l'adaptateur 2a recevra des signaux toujours sur la même longueur d'onde.

Dans le cas où l'adressage de la base 1 est dynamique, le dispositif de filtrage 33 est asservi en longueur d'onde en fonction des signaux de gestion reçus de la base. Ce dispositif de filtrage 33 pourra ainsi se caler sur la longueur d'onde de gestion λ0, lors des échanges de gestion avec la base et se caler sur une longueur d'onde appropriée en fonction des signaux de gestion reçus de la base sur la longueur d'onde de gestion. Il est avantageux de prévoir que le dispositif de filtrage 33 possède une position passe-tout, dans la bande de multiplexage en longueur d'onde, dans laquelle s'effectue la procédure de recherche automatique de position angulaire. Ainsi la procédure de recherche de position angulaire est rapide puisque pendant la recherche tous les signaux émis par la base sont pris en considération.

La partie réceptrice 2R comporte de plus une optique convergente 34 et un convertisseur optique-électrique 35. L'optique convergente 34 concentre le faisceau optique 21 qu'elle reçoit de la base 1 sur le convertisseur optique-électrique 35. La sortie du convertisseur 35 est reliée électriquement à l'appareil numérique avec lequel l'adaptateur 2a coopère via la connexion électrique 4.

L'optique convergente 34 peut être formée par une ou plusieurs lentilles convergentes. Le convertisseur optique-électrique 35 peut être formé par une photodiode PIN ou à avalanche. Une interface électrique 36 peut être placée en sortie du convertisseur optique-électrique 35 afin de mettre en correspondance les niveaux électriques obtenus par la conversion avec les niveaux électriques du protocole utilisé .

La partie émettrice 2E de l'adaptateur 2a comporte un convertisseur électrique-optique 37 relié en entrée à l'appareil numérique avec lequel coopère l'adaptateur 2a via la connexion électrique 5. Ce convertisseur électrique-optique 37 convertit, en signaux optiques, les signaux provenant de l'appareil numérique. Le convertisseur électrique-optique 37 peut être réalisé par une diode laser.

La conversion peut être statique, elle s'effectue dans une longueur d'onde de travail qui est fixée à l'avance. Cette longueur d'onde est attachée à l'adaptateur 2a. Il peut s'agir de la longueur d'onde de travail sur laquelle l'adaptateur 2a a reçu des signaux de la base ou d'une autre longueur d'onde de travail propre à l'émission.

Dans le cas d'un adressage dynamique, le convertisseur électrique-optique 37 est asservi en longueur d'onde afin d'émettre sur une longueur d'onde appropriée qui peut être la longueur d'onde de gestion λ0 ou une longueur d'onde de travail λ1, ...... ayant été attribuée par la base à l'adaptateur 2a. Le convertisseur électrique-optique 37 émet le faisceau optique 23 vers le second sous-ensemble 11 de la base 1. Une optique 39 de mise en forme de faisceau peut être placée en aval du convertisseur électrique-optique 37. Cette optique 39 peut être réalisée par une lentille divergente. Le faisceau optique 23 est un faisceau légèrement divergent. Une interface d'adaptation 38 de niveau électrique peut être placée en amont du convertisseur électrique-optique 37 pour mettre en correspondance les signaux électriques reçus de l'appareil avec ceux du convertisseur électrique-optique 37.

Il est possible que la communication entre le second sous-ensemble de la base et les adaptateurs soit une communication bidirectionnelle en alternat (cette technique étant encore connue sous la dénomination de half-duplex). La partie émettrice du second sous-ensemble de la base émet des signaux en continu pendant une fraction du temps afin de permettre à chaque adaptateur d'envoyer ses informations. Le protocole TDMA (abréviation anglo-saxonne de Time Division Multiple Access soit Accès Multiple à Répartition dans le Temps) permet cette gestion en alternat.

La figure 3B illustre une variante très avantageuse car à bas coût de l'adaptateur 2a. Cette variante fonctionne à la fois en adressage statique et dynamique. Par rapport à la figure 3A, il n'y a pas de modification en ce qui concerne la partie réceptrice 2R, excepté le fait qu'une fraction 21.2 du faisceau optique 21 qu'elle reçoit traverse, avant d'atteindre l'optique convergente 34, une face en miroir semi-transparent 391 d'un réflecteur 390 de type coin de cube (encore appelé réflecteur en trièdre trirectangle) qui fait partie de la partie émettrice 2E. On a représenté le dispositif de filtrage 33 entre l'optique convergente 34 et la face semi-transparente 391 du réflecteur 390 de type coin de cube.

La partie émettrice 2E de l'adaptateur 2a comporte le réflecteur 390 de type coin de cube qui est actif et a une fonction de modulateur. Ce réflecteur 390 de type coin de cube comporte, comme on l'a vu précédemment, sur une face le miroir semi-transparent 391 et sur au moins une autre face un miroir actif 392 par exemple de type MEMS (abréviation anglo-saxonne de Micro Electro Mechanical System pour microsystème électromécanique). Ce miroir actif 392 réfléchit ou diffracte un faisceau optique incident en fonction d'un signal numérique appliqué au miroir 392 via la connexion 50. Le faisceau optique incident est une fraction 21.1 du faisceau optique 21 incident. Un tel miroir actif 392 comporte une partie réfléchissante 392.1 (par exemple une membrane de silicium métallisée) et au moins un micro actionneur 392.2 apte à la déformer ou à la déplacer angulairement afin d'obtenir soit la réflexion soit la diffraction. Un tel miroir actif 392, monté dans un réflecteur de type coin de cube, lorsqu'il est placé en position de réflexion renvoie la fraction 21.1 exactement dans la direction du faisceau optique 21 reçu, c'est à dire vers la base 1. Le miroir actif 392 mis en position de réflexion peut réaliser une légère focalisation du faisceau optique renvoyé de manière à obtenir un bilan de liaison satisfaisant. En position de diffraction, le miroir actif 392 dévie la fraction 21.1 et la rend hors d'atteinte de la base 1. Le signal de commande est un signal numérique. De tels miroirs actifs sont dits de type MEMS car ils sont fabriqués par les technologies de la microélectronique et du micro usinage. Sur la figure 3B, la référence 23 est le faisceau optique de retour émis par l'adaptateur 2a alors que le miroir actif est en position de réflexion. Le faisceau optique 23 est collimaté et sa divergence est faible à cause des grandes dimensions du réflecteur de type coin de cube par rapport à la longueur d'onde.

La troisième face 393 du réflecteur 390 de type coin de cube peut être passive et absorbante du faisceau optique 21 reçu, soit comporter un autre miroir actif similaire à celui précédemment décrit. Dans cette dernière configuration, les deux miroirs actifs reçoivent le même signal de commandes, ils sont synchronisés.

Avec un tel adaptateur 2a les pertes géométriques de propagation sont minimisées. Le miroir actif 392 sera réalisé de manière à posséder un temps de réaction le plus petit possible. On peut espérer obtenir des temps de réaction de quelques dizaines de microsecondes voire de quelques dizaines de nanosecondes.

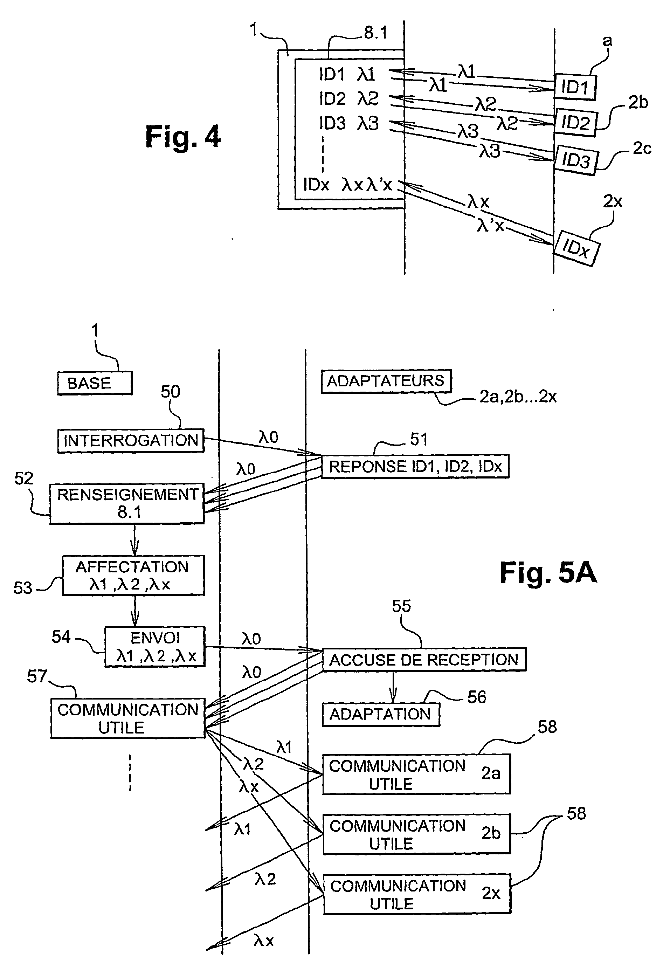

On va décrire maintenant, en se référant à la figure 4, le déroulement d'une session de transmission entre la base 1 et des adaptateurs 2a, 2b, 2c, 2x d'un dispositif de transmission selon l'invention. La base 1 initialise une communication avec les adaptateurs 2a, 2b, 2c, 2x, cette communication se faisant pour chacun des adaptateurs 2a, 2b, 2c, 2x sur une première longueur d'onde de travail respectivement λ1, λ,2, λ3, λx. Cette longueur d'onde de travail a été affectée préalablement au début de la session. Les adaptateurs 2a, 2b, 2c, 2x répondent à la base 1 sur la première longueur d'onde λ1, λ2, λ3, λx de travail ou sur une seconde longueur d'onde λ'x de travail qui leur a été affectée préalablement. Sur la figure 4, seul l'adaptateur 2x communique sur deux longueurs d'onde de travail λx, λx.

En général chaque adaptateur possède au moins une longueur d'onde qui lui est propre et qui est différente de la longueur d'onde affectée à un autre adaptateur. On peut toutefois prévoir que, si le trafic entre adaptateurs et base est faible, au moins deux adaptateurs communiquent avec la base sur une même longueur d'onde, mais dans tous les cas, au moins deux adaptateurs communiqueront sur des longueurs d'onde distinctes.

Avant de répondre, les adaptateurs, s'ils sont équipés d'un système de pointage angulaire, se calent sur le second sous-ensemble de la base en réalisant la recherche du maximum de signal à partir des signaux émis par la base. Cette étape est schématisée sur la figure 4 par le fait que les adaptateurs 2a, 2b, 2c, 2x n'ont pas tous la même orientation.

On se réfère maintenant à la figure 5A qui montre le déroulement d'une transmission entre la base 1 et des adaptateurs 2a, 2b, 2x avec adressage dynamique. La base 1 envoie aux adaptateurs 2a, 2b, 2x un signal d'interrogation sur la longueur d'onde de gestion λ0 (bloc 50). Les adaptateurs en veille répondent à la base sur la longueur d'onde de gestion λ0 en lui envoyant leur identifiant ID1, ID2, Idx (bloc 51). La base 1 renseigne la table d'adressage 8.1 avec le nombre d'adaptateurs ayant répondu (bloc 52). La base 1 affecte les longueurs d'onde de travail λ1, λ2, λx, elle fait un lien entre au moins une longueur d'onde de travail et au moins un identifiant (bloc 53). Elle renvoie à chacun des adaptateurs 2a, 2b, 2x ayant répondu, sur la longueur d'onde de gestion λ0, un message contenant au moins une longueur d'onde de travail λ1, λ2, λx (bloc 54). Les adaptateurs 2a, 2b, 2x émettent, sur la longueur d'onde de gestion λ0, un accusé de réception à destination de la base 1 (bloc 55). Chaque adaptateur 2a, 2b, 2x ayant reçu au moins une longueur d'onde de travail λ1, λ2, λx, adapte à cette longueur d'onde son filtre asservi en longueur d'onde de sa partie réceptrice 2R et son convertisseur électrique-optique asservi en longueur d'onde de sa partie émettrice 2E (bloc 56).

La base 1 peut alors initier une communication utile avec chacun des adaptateurs 2a, 2b, 2x sur la première longueur d'onde de travail λ1, λ2, λx qui lui a été affectée (bloc 57). Chaque adaptateur 2a, 2b, 2x répond sur la première longueur d'onde de travail qui lui a été affectée ou sur une seconde longueur d'onde de travail si une seconde longueur d'onde de travail a été affectée (blocs 58). Les échanges peuvent se poursuivre bilatéralement entre la base 1 et les adaptateurs 2a, 2b, 2x.

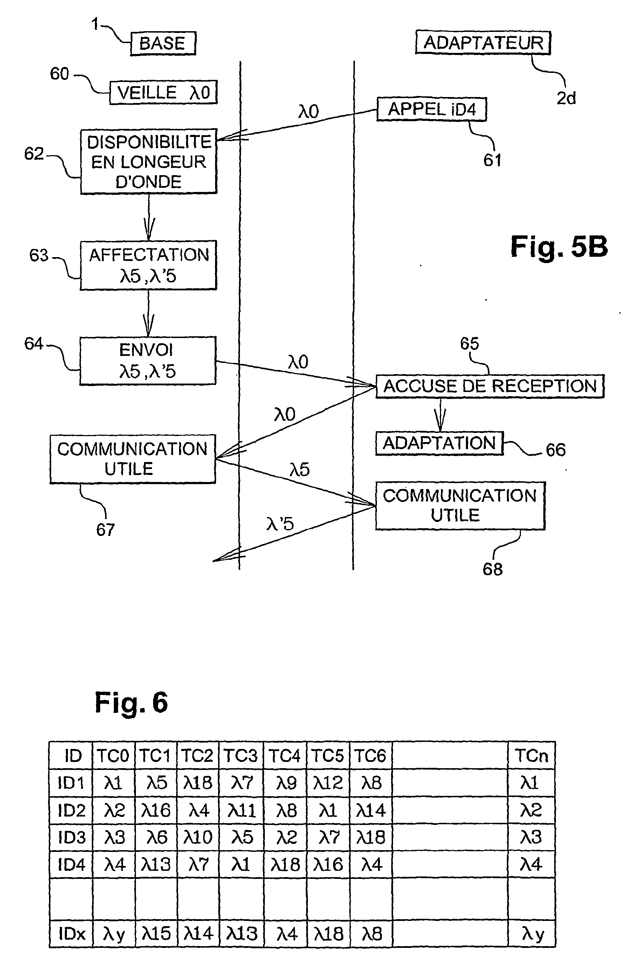

Sur la figure 5B, un nouvel adaptateur 2d désire communiquer avec la base 1, il n'était pas en veille lorsque la base a initialisé la communication avec les adaptateurs 2a, 2b, 2x de la manière illustrée à la figure 5A. La base 1 reste en veille sur la longueur d'onde de gestion λ0 (bloc 60). Le nouvel adaptateur 2d envoie un appel, sur la longueur d'onde de gestion λ0, vers la base 1, cet appel contient son identifiant ID4 (bloc 61). La base 1 en recevant ce message détermine dans la table d'adressage qu'elles sont les disponibilités en longueurs d'onde (bloc 62). Elle affecte au moins une longueur d'onde λ5, λ'5 au nouvel adaptateur 2d (bloc 63). Elle lui envoie un message contenant ces longueurs d'onde λ5, λ'5 sur la longueur d'onde de gestion λ0 (bloc 64). L'adaptateur 2d envoi un accusé de réception sur la longueur d'onde de gestion λ0 (bloc 65) et comme précédemment adapte sa partie émettrice et sa partie réceptrice à ces longueurs d'onde λ5, λ5 (bloc 66). La base 1 peut alors débuter une communication utile avec le nouvel adaptateur 2d sur la première longueur d'onde λ5 (bloc 67) et l'adaptateur 2d répond sur la seconde longueur d'onde λ5 (bloc 68). Les échanges peuvent se poursuivre bilatéralement entre la base 1 et l'adaptateur 2d. Cette procédure d'initialisation avec le nouvel adaptateur 2d peut bien sûr avoir lieu pendant que la base et d'autres adaptateurs communiquent.

Pour accroître la protection des signaux utiles transmis, ces derniers peuvent être cryptés et un mot de passe peut être nécessaire pour protéger la communication et réaliser une authentification des utilisateurs. Ce cryptage peut être réalisé par logiciel sans que cela pose de problème à un homme du métier.

Une autre manière d'accroître la protection des signaux utiles transmis est de réaliser pendant la transmission des sauts en longueur d'onde. On peut se référer à la figure 6 qui montre un exemple de table d'adressage 8.1 adaptée à un tel fonctionnement avec saut temporel en longueur d'onde. Le temps de transmission est découpé en différents intervalles de temps successifs TC0, TC1, TC2, TC3, TC4, ..... TCn. Ces intervalles de temps sont égaux ou différents. Au moins une longueur d'onde λ1 est affectée à un adaptateur 2a possédant l'identifiant ID1 pendant l'intervalle de temps TC0, pendant l'intervalle de temps suivant TC1, la longueur d'onde change et devient λ5, pendant l'intervalle de temps TC2 suivant, elle devient λ18 et ainsi de suite. La longueur d'onde de travail change à la fin de chaque intervalle de temps.

La table d'adressage 8.1 représentée concerne x adaptateurs 2a à 2x dont les identifiants sont ID1 à Idx, n+1 intervalles de temps TC0 à TCn et y longueurs d'onde λ1 à λy.

Le saut de fréquence se réalise selon des clefs de saut de manière cyclique ou pseudo aléatoire. Les clefs de saut sont connues par la base et par les adaptateurs L'adressage est statique dans chaque intervalle de temps. Les clés peuvent être basées par exemple sur des horloges de la base et des adaptateurs Pour chaque nouvelle longueur d'onde les adaptateurs configurent leur filtre et leur convertisseur électrique-optique de manière appropriée.

Il est possible d'envisager que dans une version ultérieure des protocoles soient mis en oeuvre pour réaliser un saut en longueur d'onde de la longueur d'onde de gestion.

Avec un tel dispositif de transmission, il est possible de faire communiquer en même temps de 20 à 40 appareils numériques. Cela dépend de la fenêtre de fréquence utilisée et du type de multiplexage en longueur d'onde employé (il peut être conventionnel ou dense). Chacun des canaux offre un débit de quelques Mbit/s à quelques Gbit/s, dans l'état actuel des connaissances des débits de 2,5 Gbit/s, cela dépend du bilan de liaison. Le débit brut est garanti et identique au débit utile.

Un tel dispositif de transmission est transparent au protocole transmis, c'est à dire qu'il est applicable à tous types de signaux numériques tels qu'Ethernet, MégaEthernet, GigaEthernet, ATM (abréviation anglo-saxonne de Asynchronous Transfert M de soit mode de transfert synchrone), SDH (abréviation anglo-saxonne de Synchronous Digital Hierarchy soit hiérarchie numérique synchrone), PDH (abréviation anglo-saxonne de Plesiochronous Digital Hierarchy soit hiérarchie numérique plésiochrone), xDSL (abréviation anglo-saxonne de x Digital Subscriber Line soit ligne d'abonné numérique x), Ipv4 ou Ipv6 qui sont les protocoles Internet version 4 ou 6 par exemple.

La transmission par voie optique en espace libre à faible puissance n'est ni perturbée ni perturbatrice vis à vis de signaux radioélectriques. Son utilisation n'est soumise à aucune autorisation. Les faibles puissances en jeu rendent ce dispositif de transmission sans danger identifié ou prévisible sur la santé. Une bonne sécurité des signaux transmis est obtenue grâce au cryptage et/ou au protocole de saut temporel en longueur d'onde.

La propagation optique en espace libre des signaux étant limitée aux contours d'une pièce, les perturbations induites par des dispositifs de transmission similaire situés dans des pièces voisines seront considérés comme négligeables.

### Documents cités :

[1] « Flip-chip integrated optical wireless transceivers » Dominic O'Brien et al ; Optical Wireless Communications V, Eric J, Korevaar, Editor, Proceedings of SPIE, vol. 4873 (2002).
[2] US-A1-2002/0163699
[3] US-A1-4975 926
[4] US-A1-5724 168

## Revendications

1. Système de transmission locale et bilatérale de signaux entre une base (1) et plusieurs adaptateurs (2a, 2b, 2c) par voie optique en espace libre, tel que :
- les adaptateurs (2a, 2b, 2c) possèdent chacun un identifiant (ID1, ID2, ID3),
- la base (1) comporte des moyens de routage (8) des signaux et un multiplexeur-démultiplexeur (12, 15) des signaux sur plusieurs longueurs d'onde (λ1, λ2, λ3) de travail,
- ces moyens de routage (8) disposent d'une longueur d'onde (λ0) de gestion unique pour échanger des signaux de gestion avec les adaptateurs (2a, 2b, 2c) et comportent une table d'adressage (8.1) pour réaliser une correspondance entre au moins un identifiant (ID1, ID2, ID3) d'un adaptateur (2a, 2b, 2c) et au moins une des longueurs d'onde de travail, pour affecter la longueur d'onde de gestion unique (λ0) à des communications entre la base (1) et les adaptateurs (2a, 2b, 2c) et ,
- la table d'adressage étant dynamique, pour attribuer les longueurs d'onde de travail en fonction du nombre d'adaptateurs (2a, 2b, 2c) désirant communiquer en même temps,
- un adaptateur au moins recevant l'ensemble des signaux émis par la base (1).

2. Système de transmission selon la revendication 1, **caractérisé en ce que** la base (1) comporte un premier sous-ensemble (10) avec le multiplexeur-démultiplexeur (12, 15) et les moyens de routage (8), ce premier sous-ensemble (10) coopérant avec au moins un second sous-ensemble (11).

3. Système de transmission selon la revendication 2, **caractérisé en ce que** le premier sous-ensemble (10) est relie par au moins une fibre optique (7, 17) de transmission au second sous-ensemble (11).

4. Système de transmission selon l'une des revendications 2 ou 3, **caractérisé en ce que** le premier sous-ensemble (10) de la base (1) comporte, une pluralité de convertisseurs électrique-optique (9) montés entre les moyens de routage (8) et le multiplexeur (12) et une pluralité de convertisseurs optique-électrique (16) montés entre le démultiplexeur (15) et les moyens de routage (8).

5. Système de transmission selon la revendication 4, **caractérisé en ce que** les moyens de routage (8) comportent un commutateur (8.2) relié en sortie à la pluralité de convertisseurs électrique-optique (9) et en entrée à la pluralité de convertisseurs optique-électrique (16).

6. Système de transmission selon la revendication 5, **caractérisé en ce que** le commutateur (8.2) est destiné à être relié en entrée à un réseau (6) de communication.

7. Système de transmission selon l'une des revendications 2 à 6, **caractérisé en ce que** le second sous-ensemble (11) de la base (1) comporte une partie émettrice (11E) avec une optique de mise en forme (20, 200) qui coopère avec la fibre optique (7) de transmission et une partie réceptrice (11R) avec une ou plusieurs lentilles convergentes (24, 240) qui coopèrent avec la fibre optique (17) de transmission.

8. Système de transmission selon l'une des revendications 1 à 7, **caractérisé en ce que** un adaptateur (2a) comporte une partie émettrice (2E) avec un convertisseur électrique-optique (37) et une partie réceptrice (2R) avec un convertisseur optique-électrique (35), ces convertisseurs (35, 37) étant destinés à être interfacés ou intégrés à un appareil numérique (3a).

9. Adaptateur destiné à émettre vers une base (1) un signal optique porté par une longueur d'onde qui lui est attribuée et à être interfacé ou intégré à un appareil numérique, **caractérisé en ce qu'**il comporte une partie réceptrice (2R) formée d'un dispositif de filtrage (33) asservi en longueur d'onde en fonction de signaux de gestion reçus de la base (1) et une partie émettrice (2E) comportant un convertisseur électrique-optique (37) asservi en longueur d'onde en fonction des signaux de gestion reçus de la base (1) pour émettre sur une longueur d'onde appropriée attribuée par la base (1).

10. Procédé de transmission locale et bilatérale de signaux entre une base et plusieurs adaptateurs par voie optique en espace libre, **caractérisé en ce qu'**il comporte les étapes suivantes :
a') interrogation par la base des adaptateurs sur une longueur d'onde de gestion, chaque adaptateur possédant un identifiant qui lui est propre,
b') réponse des adaptateurs désirant échanger, sur la longueur d'onde de gestion, en envoyant leur identifiant à la base,
c') affectation de premières longueurs d'onde de travail aux adaptateurs ayant répondu,
d') envoi par la base des premières longueurs d'onde de travail aux adaptateurs ayant répondu, sur la longueur d'onde de gestion,
a) initialisation d'une communication entre la base (1) et les adaptateurs (2a, 2b, 2c) ayant répondu sur les premières longueurs d'onde (λ1, λ2, λ3) de travail, cette transmission se faisant pour deux au moins des adaptateurs (2a, 2b) sur deux premières longueurs d'onde de travail différentes, chacune des deux premières longueurs d'onde étant affectée à l'un des adaptateurs, un adaptateur au moins recevant l'ensemble des signaux émis par la base,
b) réponse des adaptateurs (2a, 2b) à la base (1), cette réponse se faisant pour chacun des deux adaptateurs sur la première longueur d'onde de travail qui lui est affectée 1.

11. Procédé de transmission selon la revendication 10, **caractérisé en ce qu'**il prévoit un protocole de saut temporel en longueur d'onde pour les longueurs d'onde de travail.

## Claims

1. System for the local and bilateral transmission of signals between a base (1) and several adapters (2a, 2b, 2c) via optical channel in free space, such that:
- the adapters (2a, 2b, 2c) each have an identifier (ID1, ID2, ID3),
- the base (1) comprises means (8) for routing the signals and a multiplexer-demultiplexer (12, 15) of the signals on several working wavelengths (λ1, λ2, λ3),
- these routing means (8) have a unique management wavelength (λ0) for interchanging management signals with the adapters (2a, 2b, 2c) and comprise an addressing table (8.1) for achieving a match between at least one identifier (ID1, ID2, ID3) of an adapter (2a, 2b, 2c) and at least one of the working wavelengths, in order to assign the unique management wavelength (λ0) to communications between the base (1) and the adapters (2a, 2b, 2c) and,
- the addressing table being dynamic, in order to allocate the working wavelengths according to the number of adapters (2a, 2b, 2c) desiring to communicate at the same time,
- at least one adapter receiving all of the signals transmitted by the base (1).

2. Transmission system according to Claim 1, **characterized in that** the base (1) comprises a first subassembly (10) with the multiplexer-demultiplexer (12, 15) and the routing means (8), this first subassembly (10) interacting with at least one second subassembly (11).

3. Transmission system according to Claim 2, **characterized in that** the first subassembly (10) is connected by at least one transmission optical fibre (7, 17) to the second subassembly (11).

4. Transmission system according to one of Claims 2 and 3, **characterized in that** the first subassembly (10) of the base (1) comprises a plurality of electrical-to-optical converters (9) installed between the routing means (8) and the multiplexer (12) and a plurality of optical-to-electrical converters (16) installed between the demultiplexer (15) and the routing means (8).

5. Transmission system according to Claim 4, **characterized in that** the routing means (8) comprise a switch (8.2) connected at the output to the plurality of electrical-to-optical converters (9) and at the input to the plurality of optical-to-electrical converters (16).

6. Transmission system according to Claim 5, **characterized in that** the switch (8.2) is designed to be connected at the input to a communication network (6).

7. Transmission system according to one of Claims 2 to 6, **characterized in that** the second subassembly (11) of the base (1) comprises a transmitting portion (11E) with a formatting optical element (20, 200) which interacts with the transmission optical fibre (7) and a receiving portion (11R) with one or more convergent lenses (24, 240) which interact with the transmission optical fibre (17).

8. Transmission system according to one of Claims 1 to 7, **characterized in that** one adapter (2a) comprises a transmitting portion (2E) with an electrical-to-optical converter (37), and a receiving portion (2R) with an optical-to-electrical converter (35), these converters (35, 37) being designed to be interfaced or integrated with a digital device (3a).

9. Adapter designed to transmit to a base (1) an optical signal carried by a wavelength which is allocated to it and to be interfaced or integrated with a digital device, **characterized in that** it comprises a receiving portion (2R) formed of a filtering device (33) controlled with respect to wavelength according to management signals received from the base (1) and a transmitting portion (2E) comprising an electrical-to-optical converter (37) controlled with respect to wavelength according to the management signals received from the base (1) in order to transmit on an appropriate wavelength allocated by the base (1).

10. Method for local and bilateral transmission of signals between a base and several adapters by optical channel in free space, **characterized in that** it comprises the following steps:
a') interrogation by the base of the adapters on a management wavelength, each adapter having an identifier that is specific to it,
b') response of the adapters desiring to interchange, on the management wavelength, by sending their identifier to the base,
c') assignment of first working wavelengths to the adapters that have responded,
d') sending by the base of the first working wavelengths to the adapters that have responded, on the management wavelength,
a) initialization of a communication between the base (1) and the adapters (2a, 2b, 2c) that have responded on the first working wavelengths (λ1, λ2, λ3), this transmission being carried out for at least two of the adapters (2a, 2b) on two first different working wavelengths, each of the two first wavelengths being assigned to one of the adapters, at least one adapter receiving all of the signals transmitted by the base,
b) response of the adapters (2a, 2b) to the base (1), this response being carried out for each of the two adapters on the first working wavelength that is assigned to it.

11. Transmission method according to Claim 10, **characterized in that** it proposes a wavelength time-jumping protocol for the working wavelengths.

## Patentansprüche

1. System zu lokalen und bilateralen optischen Freiraumübertragung von Signalen zwischen einer Basis (1) und mehreren Adaptern (2a, 2b, 2c), derart, dass:
- die Adapter (2a, 2b, 2c) je eine Kennung (ID1, ID2, ID3) besitzen,
- die Basis (1) Routing-Einrichtungen (8) der Signale und einen Multiplexer-Demultiplexer (12, 15) der Signale über mehrere Arbeitswellenlängen (λ1, λ2, λ3) aufweist,
- diese Routing-Einrichtungen (8) über eine einzige Steuerungswellenlänge (λ0) zum Austausch von Steuerungssignalen mit den Adaptern (2a, 2b, 2c) verfügen und eine Ansteuerungstabelle (8.1) aufweisen, um eine Entsprechung zwischen mindestens einer Kennung (ID1, ID2, ID3) eines Adapters (2a, 2b, 2c) und mindestens einer der Arbeitswellenlängen herzustellen, um die einzige Steuerungswellenlänge (λ0) Kommunikationen zwischen der Basis (1) und den Adaptern (2a, 2b, 2c) zuzuweisen, und
- die Ansteuerungstabelle dynamisch ist, um die Arbeitswellenlängen abhängig von der Anzahl von Adaptern (2a, 2b, 2c), die gleichzeitig kommunizieren möchten, zuzuteilen,
- mindestens ein Adapter die Gesamtheit der von der Basis (1) gesendeten Signale empfängt.

2. Übertragungssystem nach Anspruch 1, **dadurch gekennzeichnet, dass** die Basis (1) eine erste Teileinheit (10) mit dem Multiplexer-Demultiplexer (12, 15) und den Routing-Einrichtungen (8) aufweist, wobei diese erste Teileinheit (10) mit mindestens einer zweiten Teileinheit (11) zusammenwirkt.

3. Übertragungssystem nach Anspruch 2, **dadurch gekennzeichnet, dass** die erste Teileinheit (10) durch mindestens eine Übertragungs-Lichtleitfaser (7, 17) mit der zweiten Teileinheit (11) verbunden ist.

4. Übertragungssystem nach einem der Ansprüche 2 oder 3, **dadurch gekennzeichnet, dass** die erste Teileinheit (10) der Basis (1) eine Vielzahl von elektro-optischen Wandlern (9), die zwischen den Routing-Einrichtungen (8) und dem Multiplexer (12) montiert sind, und eine Vielzahl von opto-elektrischen Wandlern (16) aufweist, die zwischen dem Demultiplexer (15) und den Routing-Einrichtungen (8) montiert sind.

5. Übertragungssystem nach Anspruch 4, **dadurch gekennzeichnet, dass** die Routing-Einrichtungen (8) einen Schalter (8.2) aufweisen, der am Ausgang mit der Vielzahl von elektro-optischen Wandlern (9) und am Eingang mit der Vielzahl von opto-elektrischen Wandlern (16) verbunden ist.

6. Übertragungssystem nach Anspruch 5, **dadurch gekennzeichnet, dass** der Schalter (8.2) dazu bestimmt ist, am Eingang mit einem Kommunikationsnetz (6) verbunden zu werden.

7. Übertragungssystem nach einem der Ansprüche 2 bis 6, **dadurch gekennzeichnet, dass** die zweite Teileinheit (11) der Basis (1) einen Sendeteil (11E) mit einer Formgebungsoptik (20, 200), die mit der Übertragungs-Lichtleitfaser (7) zusammenwirkt, und einen Empfangsteil (11R) mit einer oder mehreren konvergierenden Linsen (24, 240) aufweist, die mit der Übertragungs-Lichtleitfaser (17) zusammenwirken.

8. Übertragungssystem nach einem der Ansprüche 1 bis 7, **dadurch gekennzeichnet, dass** ein Adapter (2a) einen Sendeteil (2E) mit einem elektro-optischen Wandler (37) und einen Empfangsteil (2R) mit einem opto-elektrischen Wandler (35) aufweist, wobei diese Wandler (35, 37) dazu bestimmt sind, mit einem digitalen Gerät (3a) verbunden oder in dieses integriert zu werden.

9. Adapter, der dazu bestimmt ist, ein von einer ihm zugeteilten Wellenlänge getragenes optisches Signal zu einer Basis (1) zu senden und mit einem digitalen Gerät in Verbindung zu stehen oder darin integriert zu sein, **dadurch gekennzeichnet, dass** er einen von einer abhängig von von der Basis (1) empfangenen Steuerungssignalen wellenlängenabhängigen Filtervorrichtung (33) geformten Empfangsteil (2R) und einen Sendeteil (2E) aufweist, der einen von den von der Basis (1) empfangenen Steuerungssignalen wellenlängenabhängigen elektro-optischen Wandler (37) aufweist, um auf einer von der Basis (1) zugeteilten, geeigneten Wellenlänge zu senden.

10. Verfahren zur lokalen und bilateralen optischen Freiraumübertragung von Signalen zwischen einer Basis und mehreren Adaptern, **dadurch gekennzeichnet, dass** es die folgenden Schritte aufweist:
a') Abfrage, durch die Basis, der Adapter auf einer Steuerungswellenlänge, wobei jeder Adapter eine ihm eigene Kennung besitzt,
b') Antwort der austauschbereiten Adapter auf der Steuerungswellenlänge, indem sie ihre Kennung an die Basis schicken,
c') Zuweisung erster Arbeitswellenlängen an die Adapter, die geantwortet haben,
d') Schicken, durch die Basis, der ersten Arbeitswellenlängen an die Adapter, die geantwortet haben, auf der Steuerungswellenlänge,
a) Initialisierung einer Kommunikation zwischen der Basis (1) und den Adaptern (2a, 2b, 2c), die geantwortet haben, auf den ersten Arbeitswellenlängen (λ1, λ2, λ3), wobei diese Übertragung für mindestens zwei der Adapter (2a, 2b) auf zwei ersten unterschiedlichen Arbeitswellenlängen erfolgt, wobei jede der zwei ersten Wellenlängen einem der Adapter zugewiesen ist, wobei mindestens ein Adapter die Gesamtheit der von der Basis gesendeten Signale empfängt,
b) Antwort der Adapter (2a, 2b) an die Basis (1), wobei diese Antwort für jeden der zwei Adapter auf der ersten Arbeitswellenlänge erfolgt, die ihm zugewiesen ist.

11. Übertragungsverfahren nach Anspruch 10, **dadurch gekennzeichnet, dass** es ein Wellenlängen-Zeitsprungprotokoll für die Arbeitswellenlängen vorsieht.
